# FASCICULE DE BREVET EUROPEEN

(11) **EP 4 331 073 B1**
(45) Date de publication et mention de la délivrance du brevet: **07.05.2025**
(21) Numéro de dépôt: 22712966.5
(22) Date de dépôt: 04.03.2022
(51) Int. Cl.: H02J 7/00, H02J 7/14

(54) **GESTION DE LA TENSION DE RECHARGE CIBLE D'UNE BATTERIE ÉLECTRIQUE RECHARGEABLE POUR VÉHICULE AUTOMOBILE**
STEUERUNG DER ZIELLADESPANNUNG EINER WIEDERAUFLADBAREN ELEKTRISCHEN BATTERIE FÜR KRAFTFAHRZEUGE
CONTROL OF A TARGET CHARGING VOLTAGE OF A RECHARGEABLE ELECTRICAL BATTERY FOR MOTOR VEHICLE

(30) Priorité: 29.04.2021 FR 2104490
(43) Date de publication de la demande: 06.03.2024
(73) Titulaire: Stellantis Auto SAS, 78300 Poissy (FR)
(72) Inventeur: BOTCHON, Yannick, 92160 ANTONY (FR)
(74) Mandataire: PSIP
(86) Numéro de dépôt international: PCT/FR2022/050390
(87) Numéro de publication internationale: WO 2022/229522

(56) Documents cités:
- EP-A1- 2 982 850
- KR-A- 20110 062 810
- US-A1- 2006 113 964
- US-A1- 2009 295 399
- US-A1- 2015 048 802

## Description

Le contexte technique de la présente invention est celui de la gestion d'une batterie électrique rechargeable d'un véhicule automobile. La présente invention trouve une application particulièrement avantageuse à la gestion énergétique d'une batterie électrique rechargeable pour des véhicules thermiques, hybrides ou électriques, telle que, par exemple, un stockeur électrique du type lithium-ion configuré pour restituer un courant électrique continu sous une tension de 12 Volt.

L'utilisation de telles batteries électriques rechargeables dans le domaine automobile est de plus en plus répandue notamment pour la gestion d'éléments connectés du véhicule, que ces éléments interviennent dans la gestion de phases de roulage du véhicule ou qu'ils soient mis en œuvre pour le confort des utilisateurs. Ces batteries électriques rechargeables présentent des avantages notamment en termes de poids et de densité énergétique. Il est néanmoins nécessaire de s'assurer que les limites de tension dans lesquelles elles opèrent assurent leur utilisation en toute sécurité tout en garantissant leurs performances.

On connait en outre du document de brevet EP-A1-2982850 un procédé selon le préambule de la revendication 1.

La présente invention a pour but de proposer une nouvelle solution de gestion de l'état de charge d'une batterie électrique rechargeable telle qu'elle vient d'être évoquée en fonction de l'utilisation d'une telle batterie électrique.

Un autre but de l'invention est d'améliorer les performances associées à l'utilisation d'une telle batterie électrique.

Un autre but de l'invention est d'améliorer la sécurité électrique d'un réseau basse tension d'un véhicule automobile alimenté par une telle batterie électrique.

Selon un premier aspect, l'invention a pour objet un procédé de gestion d'une consigne de tension de recharge cible d'une batterie électrique rechargeable de véhicule automobile, le procédé comportant les étapes suivantes :
- une étape de définition d'un état de charge cible de la batterie électrique rechargeable,
- une étape de détermination d'une tension de recharge cible de la batterie électrique rechargeable en fonction de l'état de charge cible de ladite batterie électrique rechargeable,
- une étape de sécurisation de la tension de recharge cible de la batterie électrique rechargeable, conduisant à définir une tension de recharge sécurisée de ladite batterie électrique rechargeable en fonction de la tension de recharge cible,
- une étape de définition d'une consigne de tension de recharge cible de la batterie électrique rechargeable.

L'invention s'applique exclusivement aux batteries électriques rechargeables du type batteries lithium-ion.

L'état de charge cible de la batterie électrique rechargeable représente la quantité d'énergie qui doit être stockée dans cette dernière pour garantir son fonctionnement dans les conditions souhaitées. L'état de charge cible dépend donc de la configuration du véhicule et des besoins énergétiques de celui-ci. En particulier, lorsque le véhicule est équipé d'une fonctionnalité d'arrêt/démarrage automatique du véhicule telle que celles connues sous le nom de "Stop and Start", ses besoins énergétiques diffèrent selon que l'état d'activation de cette fonctionnalité est actif ou non.

En effet, dans le cas où une telle fonctionnalité est inactive, les besoins énergétiques du véhicule peuvent se limiter, par exemple, aux besoins liés, lorsque le véhicule est arrêté, à la réalisation d'un démarrage et/ou à la mise en œuvre d'autres fonctionnalités telles que, par exemple, des fonctionnalités connectées, ainsi qu'aux besoins liés à la durabilité de la batterie rechargeable.

Dans le cas où une telle fonctionnalité d'arrêt/démarrage automatique est active, l'état de charge cible précité doit prendre en compte les différentes quantités d'énergie nécessaires pour garantir le fonctionnement le véhicule dans les différentes phases successives de la mise en œuvre de cette fonctionnalité. Ces différentes quantités d'énergie prennent notamment en compte, d'une part, les besoins énergétiques liés à la réalisation de l'étape d'arrêt automatique, d'autre part, la quantité d'énergie consommée par le véhicule pendant la durée de mise en œuvre de cet arrêt automatique, et, enfin, la quantité d'énergie nécessaire à la réalisation d'une étape de démarrage automatique à l'issue de l'étape d'arrêt automatique, tout en conservant une quantité d'énergie suffisante pour la mise en œuvre d'une ou plusieurs autres étapes successives d'arrêt/démarrage d'une manière satisfaisante et confortable pour l'utilisateur du véhicule.

Dans le cas où une fonctionnalité d'arrêt/démarrage automatique du véhicule automobile est active, le procédé selon l'invention prévoit donc notamment que l'état de charge cible de la batterie électrique rechargeable est déterminé en fonction :
- d'un état de charge cible permettant de réaliser la fonctionnalité d'arrêt-démarrage automatique, et
- d'une estimation d'une consommation électrique du véhicule automobile arrêté pendant une période de référence.

Avantageusement, la période de référence inclut la période pendant laquelle le véhicule est dans la configuration d'arrêt automatique. Selon un exemple, cette période de référence peut également inclure une période de démarrage automatique du véhicule après une période d'arrêt automatique.

Il résulte de ce qui précède que, dans un tel véhicule, le procédé selon l'invention prévoit également que l'étape de fixation de l'état de charge cible comporte une étape de détermination d'une marge énergétique de la batterie électrique rechargeable nécessaire à la réalisation de la fonctionnalité d'arrêt-démarrage automatique du véhicule automobile et à la fourniture d'une énergie électrique suffisante à la consommation électrique estimée du véhicule automobile arrêté.

Avantageusement, cette marge énergétique est déterminée à partir d'une cartographie de l'état de charge de la batterie électrique rechargeable en fonction de sa température et d'une estimation de la consommation électrique du véhicule arrêté pendant la période de référence.

L'état de charge cible prend également notamment en compte une température de la batterie électrique rechargeable. Cette dernière peut, par exemple, être connue d'un dispositif de gestion de la batterie électrique rechargeable configuré pour communiquer cette information à une unité de contrôle de la batterie.

L'état de charge cible peut donc être déterminé dès lors que la température de la batterie électrique rechargeable et que les besoins énergétiques du véhicule sont connus en fonction de la configuration du véhicule. Cette détermination peut être faite par calcul et/ou sur la base de cartographies de la batterie électrique rechargeable préalablement établies.

La tension de recharge cible de la batterie électrique rechargeable est à comprendre ici comme la tension à appliquer aux bornes cette dernière pour la recharger de manière à atteindre l'état de charge cible précédemment défini.

Plus précisément, le procédé selon l'invention prévoit que la tension de recharge cible est définie de telle manière qu'elle permet, d'une part, la décharge de la batterie dès lors que son état de charge est supérieur à l'état de charge cible précité, d'autre part, la charge de la batterie lorsque son état de charge est inférieur à l'état de charge cible précédemment évoqué, et, enfin, le maintien de la charge de la batterie au niveau de l'état de charge cible dès lors que celui-ci est atteint.

En d'autres termes, l'invention propose donc d'ajuster et de piloter la tension de recharge de la batterie électrique rechargeable afin de maintenir un niveau de charge prédéterminé de celle-ci, avantageusement le niveau de l'état de charge cible précédemment défini ou, plus précisément, un niveau aussi proche que possible de cet état de charge cible.

Pour ce faire, l'étape de détermination de la tension de recharge cible comprend avantageusement une étape de détermination d'une tension à vide aux bornes de la batterie électrique rechargeable. Cette tension à vide est notamment définie à partir d'une température de la batterie électrique rechargeable, et elle correspond à un état de charge donné pour une température prédéfinie. Une telle information est, par exemple, connue des fournisseurs de batteries électriques rechargeable similaires sous forme d'abaques définies pour différentes températures et différents états de charge de la batterie.

L'étape de détermination de la tension de recharge cible comporte également une étape de définition d'une tension additionnelle à appliquer aux bornes de la batterie électrique rechargeable, la tension additionnelle étant déterminée à partir d'une température et d'un état de charge de la batterie électrique rechargeable, la tension de recharge cible étant déterminée par la somme de la tension à vide précédemment définie et de la tension additionnelle précitée.

Avantageusement, l'étape de sécurisation de la tension de recharge cible de la batterie électrique rechargeable comporte une vérification de la tension de recharge cible au regard d'une tension seuil maximale et d'une tension seuil minimale, la tension de recharge cible de la batterie électrique rechargeable devant être comprise entre la tension seuil maximale et la tension seuil minimale. La tension de recharge cible doit être située entre ces deux seuils de tension pour garantir, d'une part, le fonctionnement correct et en sécurité de la batterie électrique rechargeable et, d'autre part, la durabilité de cette dernière.

Avantageusement, durant l'étape de sécurisation de la tension de recharge cible, la tension de recharge sécurisée est égale à :
- la tension de recharge cible si la tension de recharge cible est comprise entre la tension seuil minimale ou la tension seuil maximale précitées, ou si la tension de recharge cible est égale à la tension seuil minimale ou à la tension seuil maximale,
- la tension seuil minimale si la tension de recharge cible est strictement inférieure à la tension seuil minimale,
- la tension seuil maximale si la tension de recharge cible est strictement supérieure à la tension seuil maximale.

Selon un exemple de mise en œuvre du procédé selon l'invention, l'étape de sécurisation de la tension de recharge cible de la batterie électrique rechargeable comporte une étape de vérification qu'une variation instantanée de la tension de recharge est comprise entre un gradient minimal de tension et un gradient maximal de tension.

En d'autres termes, selon cet exemple, le procédé selon l'invention prévoit une comparaison entre, d'une part, une variation instantanée de la tension de recharge et, d'autre part, un gradient minimal et un gradient maximal de cette tension. Ceci permet, notamment, la prise en compte d'éventuels phénomènes transitoires pouvant survenir lors de la charge et/ou lors du fonctionnement de la batterie électrique rechargeable, par exemple consécutivement à la survenue de phénomènes transitoires lors du fonctionnement du véhicule.

La tension de recharge cible de la batterie électrique rechargeable est ici à comprendre comme la tension de recharge effectivement appliquée à cette batterie à un instant donnée, par exemple mesurée aux bornes de la batterie électrique rechargeable ou aux bornes d'un producteur électrique configuré pour recharger la batterie électrique rechargeable, qu'il s'agisse, à titre d'exemples non exhaustifs, d'un alternateur ou d'un convertisseur de courant du véhicule. La variation instantanée de la tension de recharge est à comprendre comme la différence entre la tension de recharge cible précédemment définie et la tension de recharge effectivement mesurée à un instant donné.

La consigne de tension de recharge cible de la batterie électrique rechargeable est ensuite définie sur la base de la tension de recharge sécurisée.

Avantageusement, le procédé selon l'invention comporte également une étape de régulation de la variation instantanée de la tension de recharge cible de la batterie électrique rechargeable, de sorte que :
- si la variation instantanée de la tension de recharge est strictement supérieure au gradient maximal de tension précédemment défini, alors la tension de recharge appliquée à la batterie électrique rechargeable est réduite de manière à ce que la variation instantanée de tension de recharge soit inférieure ou égale au gradient maximal de tension, et
- si la variation instantanée de la tension de recharge est strictement inférieure au gradient minimal de tension, alors la tension de recharge de la batterie électrique est augmentée de manière à ce que la variation instantanée de tension de recharge soit supérieure ou égale au gradient minimal de tension.

Le procédé selon l'invention présente également avantageusement une ou plusieurs des caractéristiques suivantes, prises séparément ou en combinaison :
- le procédé comporte une étape de correction de la tension de recharge cible appliquée aux bornes de la batterie électrique rechargeable à partir de la tension de recharge sécurisée et d'une valeur de la tension de recharge mesurée aux bornes de la batterie électrique rechargeable.
- l'étape de correction de la tension de recharge appliquée aux bornes de la batterie électrique rechargeable met en œuvre une régulation de type proportionnel-intégral-dérivé à partir d'un écart entre la tension de recharge sécurisée et une valeur de tension de recharge mesurée aux bornes de la batterie électrique rechargeable, ou variation de tension corrective initiale, afin de calculer un facteur de correction de ladite tension de polarisation. Plus précisément, si la variation de tension corrective initiale est comprise entre une valeur minimale et une valeur maximale, le facteur de correction de la tension de recharge est égal à la variation de tension corrective initiale. Si la variation de tension corrective initiale est strictement inférieure à la valeur minimale, le facteur de correction de la tension de recharge est égal à la valeur minimale précitée. Si la variation de tension corrective initiale est strictement supérieure à la valeur maximale, le facteur de correction de la tension de recharge est égal à la valeur maximale précitée.
- la consigne de tension de recharge cible de la batterie électrique est déterminée par la tension de recharge sécurisée à laquelle est appliqué le facteur de correction précédemment défini. Avantageusement, le procédé comporte une étape ultérieure de pilotage d'un producteur électrique couplé électriquement à la batterie électrique rechargeable, le producteur électrique étant configuré pour polariser la batterie électrique rechargeable selon la consigne de tension de recharge cible précitée.

L'invention réalise ainsi un contrôle et un ajustement permanent de la tension de recharge à appliquer aux bornes d'une batterie électrique rechargeable pour assurer un fonctionnement optimal de cette dernière. Ceci permet de limiter toute consommation inutile d'énergie à la fois au sein de la batterie électrique rechargeable et au sein d'un producteur électrique couplé électriquement à la batterie électrique rechargeable pour recharger cette dernière, tout en garantissant les performances de fonctionnement et la durabilité de ladite batterie électrique rechargeable.

Selon un deuxième aspect, l'invention concerne une unité de contrôle d'une batterie électrique de véhicule automobile, l'unité de contrôle étant configurée pour mettre en œuvre le procédé tel qu'il vient d'être décrit.

Selon un troisième aspect, l'invention concerne un véhicule automobile comportant :
- un réseau de bord alimenté en énergie électrique par un groupe d'alimentation comportant une batterie électrique rechargeable telle qu'évoquée précédemment,
- un producteur électrique couplé électriquement à la batterie électrique rechargeable et configuré pour pouvoir recharger ladite batterie électrique rechargeable,
- une unité de contrôle telle que précédemment évoquée, connectée à la batterie électrique rechargeable et au producteur électrique, de sorte que le producteur électrique pilote une tension de recharge de la batterie électrique rechargeable en fonction d'une consigne de tension de recharge cible déterminée par l'unité de contrôle.

D'autres caractéristiques et avantages de l'invention apparaîtront encore au travers de la description qui suit d'une part, et des exemples de réalisation donnés à titre indicatif et non limitatif en référence aux dessins schématiques annexés d'autre part, sur lesquels :
[Fig.1] illustre schématiquement une unité de contrôle selon l'invention, ainsi qu'un ensemble de contrôle et de gestion d'une batterie électrique à laquelle l'unité de contrôle est associée.
[Fig.2] illustre schématiquement le procédé selon l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

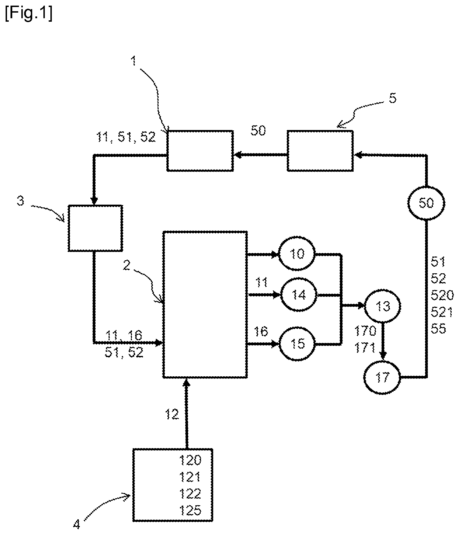

La Figure 1 montre, schématiquement illustrées, une batterie électrique rechargeable 1 d'un véhicule automobile et une unité de contrôle 2 de la batterie électrique rechargeable 1 telle que prévue par l'invention. Selon un exemple préféré, mais non exclusif, la batterie électrique rechargeable 1 est du type d'un stockeur 12 Volt, c'est-à-dire qu'elle est configurée pour stocker de l'énergie électrique et pour restituer cette dernière sous la forme d'un courant électrique continu sous une tension de 12 Volt. A titre d'exemples non limitatifs, une telle tension est typiquement celle mise en œuvre dans un véhicule automobile lors de phases de démarrage du véhicule ou pour la mise en œuvre de fonctionnalités d'arrêt/démarrage automatique du véhicule telles que celles connues sous la dénomination anglo-saxonne "Stop and Start".

L'unité de contrôle 2 est notamment configurée pour mettre en œuvre le procédé selon l'invention tel que décrit précédemment.

Pour ce faire, l'unité de contrôle 2 est notamment configurée pour déterminer un état de charge cible 10 de la batterie électrique rechargeable 1. Comme indiqué précédemment, l'état de charge cible 10 représente la quantité d'énergie qui doit être stockée dans la batterie électrique rechargeable 1 pour garantir, d'une part, les performances de cette dernière, et, d'autre part, sa durabilité. L'état de charge cible 10 est notamment déterminé en fonction, d'une part, d'une température 11 de la batterie électrique rechargeable 1, et, d'autre part, des besoins énergétiques 12 du véhicule automobile équipé de la batterie électrique rechargeable 1.

Selon un exemple, la température 11 précitée est mesurée par un capteur de température installé sur la batterie électrique 1 et l'unité de contrôle 2 comporte un récepteur configuré pour recevoir et stocker l'information de température mesurée par le capteur précité. Selon un autre exemple, la température 11 de la batterie électrique 1 est mesurée dans un dispositif 3 de gestion de cette dernière et transmise à l'unité de contrôle 2 qui comporte avantageusement des moyens, non représentés sur la Figure 1, pour communiquer avec le dispositif de gestion de la batterie électrique 1.

Les besoins énergétiques 12 du véhicule sont déterminés en fonction de l'état d'activation de différentes fonctionnalités du véhicule et, notamment, en fonction de l'état d'activation de fonctionnalités d'arrêt/démarrage automatique telles que celles connues sous la dénomination anglo-saxonne de "Stop and Start".

Plus précisément, dans le cas d'un véhicule équipé d'une fonctionnalité d'arrêt/démarrage automatique telle que précitée, et dans le cas où cette fonctionnalité est active, l'état de charge cible prend avantageusement en compte, d'une part, des besoins énergétiques 120 nécessaires à la réalisation d'un arrêt automatique du véhicule, d'autre part, des besoins énergétiques 121 nécessaires au fonctionnement du véhicule lors de la phase d'arrêt automatique, et enfin, des besoins énergétiques 122 nécessaires à la réalisation d'un redémarrage automatique du véhicule consécutivement à la phase d'arrêt automatique. En d'autres termes, dans ce cas, les besoins énergétiques 12 du véhicule pris en compte pour la détermination de l'état de charge cible 10 prennent en compte une quantité d'énergie 125, également désignée dans ce qui précède comme marge énergétique, nécessaire à la fois, d'une part, à la réalisation de l'arrêt automatique et du démarrage automatique, et, d'autre part, à la consommation électrique du véhicule lorsque celui-ci est arrêté. La détermination des besoins énergétiques 12 précités est donc notamment basée, dans ce cas, sur une estimation d'une consommation électrique du véhicule pendant sa période d'arrêt automatique.

Dans le cas d'un véhicule non équipé d'une fonctionnalité d'arrêt/démarrage automatique, ou dans le cas où cette fonctionnalité n'est pas active, l'état de charge cible 10 peut, par exemple, être fixé à un pourcentage prédéfini d'une capacité nominale de charge de la batterie électrique rechargeable. Par exemple, ce pourcentage peut être compris entre 80 et 90% de la capacité nominale précitée, par exemple 85%.

Les besoins énergétiques 12 du véhicule sont, par exemple, déterminés au sein d'une unité centrale 4 de contrôle et de pilotage du véhicule avec laquelle l'unité de contrôle 2 est configurée pour communiquer. Ils peuvent être établis sur la base de mesures de la consommation électrique du véhicule lors de différentes phases de fonctionnement de celui-ci, ainsi que sur la base de courbes d'étalonnage ou de cartographies préalablement réalisées.

L'unité de contrôle 2 est également configurée pour déterminer une tension de recharge cible 13 de la batterie électrique rechargeable 1. La tension de recharge cible 13 représente la tension devant être appliquée aux bornes de la batterie électrique rechargeable 1, par exemple au moyen d'un producteur électrique 5 tel qu'un alternateur ou un convertisseur du type DCDC du véhicule, pour recharger la batterie électrique rechargeable 1 et atteindre l'état de charge cible 10 précédemment défini. La tension de recharge cible 13 est notamment déterminée, au sein de l'unité de contrôle 2, en fonction de l'état de charge cible 10 précédemment défini et de la température 11 de la batterie électrique rechargeable 1.

Avantageusement, l'unité de contrôle 2 est également configurée pour communiquer avec un producteur électrique 5 tel que précédemment défini, afin, d'une part, de piloter ce producteur électrique 5 afin que celui-ci applique aux bornes de la batterie électrique rechargeable 1 la consigne 50 de tension de recharge cible précitée, déterminée par l'unité de contrôle 2, et, d'autre part, de recevoir du producteur électrique 5 une information relative à une tension de recharge 51 effectivement appliquée aux bornes de la batterie électrique rechargeable 1. La consigne de tension de recharge cible 50 est déterminée sur la base de l'état de charge cible 10 et de la tension de recharge cible 13 précédemment définis.

Plus précisément, l'unité de contrôle 2 est avantageusement configurée pour déterminer, à partir de la température 11 précédemment définie et de l'état de charge de la batterie électrique rechargeable 1, par exemple connu par le système 3 précédemment évoqué, une tension à vide 14 de la batterie électrique rechargeable 1. La tension à vide 14 est, par exemple, définie à partir d'une cartographie de tension de batteries électriques rechargeables similaires, établie au préalable, par exemple par des fournisseurs de ce type de batteries, pour différentes températures et différents états de charge de la batterie électrique rechargeable 1.

Avantageusement, l'unité de contrôle 2 est également configurée pour définir une tension additionnelle 15 à appliquer aux bornes de la batterie électrique rechargeable 1 et pour commander le producteur électrique 5 à appliquer cette tension additionnelle 15 aux bornes de la batterie électrique rechargeable 1 en complément de la tension à vide 14 précitée afin d'atteindre la tension de recharge cible 13 précédemment définie. La tension de recharge cible 13 est donc obtenue par la somme de la tension à vide 14 et de la tension additionnelle 15.

Il faut comprendre ici que la tension additionnelle 15 est définie, à un instant t donné, en fonction de l'état de charge cible 10 précédemment défini et d'un état de charge 16 de la batterie électrique rechargeable 1, par exemple mesuré par le système de gestion 3 de cette batterie à l'instant t précité.

Plus précisément, la tension additionnelle 15 est déterminée de telle manière que :
- si l'état de charge 16 est supérieur à l'état de charge cible 10, c'est-à-dire si la quantité d'énergie stockée dans la batterie rechargeable 1 est supérieure à la quantité d'énergie définie par l'état de charge cible 10, l'application de la tension additionnelle 15 conduit à une décharge de la batterie électrique rechargeable 1.
- si l'état de charge 16 est inférieur à l'état de charge cible 10, c'est-à-dire si la quantité d'énergie stockée dans la batterie rechargeable 1 est inférieure à la quantité d'énergie définie par l'état de charge cible 10, l'application de la tension additionnelle 15 conduit à une charge de la batterie électrique rechargeable 1.
- si l'état de charge 16 est égal à l'état de charge cible 10, c'est-à-dire si la quantité d'énergie stockée dans la batterie rechargeable 1 est égale à la quantité d'énergie définie par l'état de charge cible 10, l'application de la tension additionnelle 15 conduit à un maintien de la charge de la batterie électrique rechargeable 1.

Ceci permet notamment d'éviter toute sollicitation excessive à la fois de la batterie électrique rechargeable 1 et du producteur électrique 5, et, ainsi, d'augmenter la durée de vie de ces éléments tout en garantissant que l'état de charge de la batterie électrique rechargeable 1 est aussi proche que possible de l'état de charge cible 10.

L'unité de contrôle 2 est donc configurée pour comparer un état de charge 16 de la batterie électrique rechargeable 1 à un instant t donné, par exemple connu du système de gestion 3 précédemment évoqué, avec l'état de charge cible 10.

Pour un meilleur contrôle de la charge de la batterie électrique rechargeable 1, l'unité de contrôle 2 est configurée pour calculer, à partir de la tension de recharge cible 13 précédemment définie, une tension de recharge sécurisée 17, avantageusement comprise entre une tension seuil minimale 170 et une tension seuil maximale 171. La tension de recharge sécurisée 17 est donc définie sur la base de limites de fonctionnement de la batterie électrique rechargeable 1, elles-mêmes connues, par exemple, transmises à l'unité de contrôle 2 par le système 3 de gestion de la batterie électrique rechargeable 1.

L'unité de contrôle 2 est également avantageusement configurée pour comparer la tension de recharge cible 13 précédemment définie avec une tension de recharge 51 effectivement appliquée aux bornes de la batterie électrique rechargeable 1 à un instant t donné. La tension de recharge effective 51 est, par exemple, mesurée par le producteur électrique 5 et/ou par le système 3 de gestion de la batterie, et communiquée à l'unité de contrôle 2 configurée pour communiquer avec ces éléments.

Plus précisément, l'unité de contrôle 2 comporte des moyens de calcul d'une variation instantanée 52 de la tension de recharge aux bornes de la batterie électrique rechargeable 1. La variation instantanée de tension 52 est, par exemple, définie comme la différence entre la tension de recharge cible 13 et la tension de recharge 51 effectivement appliquée aux bornes de la batterie électrique rechargeable 1 à un instant t donné.

Selon l'invention, l'unité de contrôle 2 comporte des moyens de régulation de la variation instantanée de tension 52. Ceci permet notamment d'éviter toute surtension excessive aux bornes de la batterie électrique rechargeable, par exemple résultant d'un besoin transitoire accru en courant. En d'autres termes, la régulation précitée permet de limiter les effets, sur la batterie électrique rechargeable 1, d'une part, et sur les composants que cette batterie alimente au sein du véhicule, d'autre part, de phénomènes transitoires pouvant conduire à un accroissement bref mais important des besoins énergétiques du véhicule. Cette régulation permet donc d'améliorer la durée de vie de la batterie électrique rechargeable 1 et des composants que cette dernière alimente électriquement.

Selon un exemple, l'unité de contrôle 2 comporte des moyens de comparaison de la variation instantanée de tension 52 précédemment définie avec, d'une part, une valeur minimale 520 de gradient de tension, et, d'autre part, une valeur maximale 521 de gradient de tension, de telle manière qu'en fonction du résultat de cette comparaison, la consigne de tension de recharge cible 50 transmise par l'unité de contrôle 2 au producteur électrique 5 soit augmentée ou réduite.

Plus précisément, l'invention prévoit que la consigne de tension de recharge cible 50 est augmentée si la variation instantanée de tension 52 est inférieure à la valeur minimale 520 de gradient de tension, et que la consigne de tension de recharge cible 50 est réduite si la variation instantanée de tension 52 est supérieure à la valeur maximale 521 de gradient de tension. La régulation de la variation instantanée 52 de tension permet ainsi une modification progressive de la consigne de tension de recharge cible 50 appliquée aux bornes de la batterie électrique rechargeable 1, sans à-coup important, préservant ainsi la durée de vie de la batterie électrique rechargeable 1 et celle des éléments du véhicule alimentés électriquement par cette dernière.

Selon l'invention, l'unité de contrôle 2 comporte des moyens de calcul configurés pour corriger la consigne de tension de recharge cible 50 transmise au producteur électrique 5 à partir de la tension de recharge sécurisée 17 et de la tension de recharge 51 effectivement appliquée aux bornes de la batterie électrique 1. Selon cet exemple, l'unité de contrôle 2 est configurée pour calculer un facteur de correction 55 sur la base d'un écart entre la tension de recharge sécurisée 17 et la tension de recharge 51 effectivement appliquée aux bornes de la batterie 1, et pour appliquer ce facteur de correction 55 à la consigne de tension de recharge cible 50 précitée. Selon différents exemples, le facteur de correction 55 peut être ajouté à la consigne de tension de recharge cible 50, ou le facteur de correction 55 peut se présenter sous la forme d'un coefficient multiplicateur appliqué à la consigne de tension de recharge cible 50.

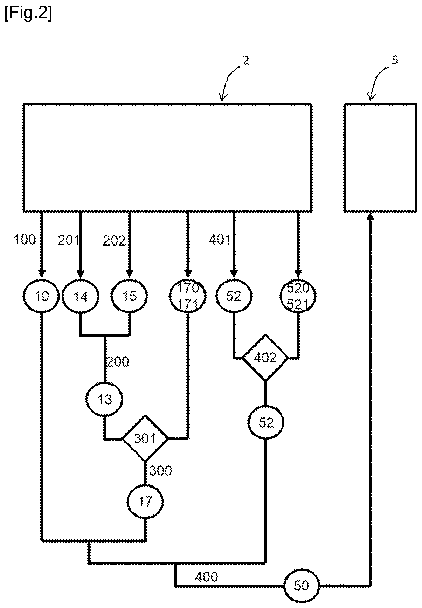

La Figure 2 montre schématiquement le déroulement du procédé selon l'invention et les différentes étapes de celui-ci dans le cas d'un véhicule équipé d'une fonctionnalité d'arrêt/démarrage automatique.

On retrouve notamment sur la Figure 2, schématiquement représentés, l'unité de contrôle 2 et le producteur électrique 5 précédemment définis.

Dans une première étape 100 du procédé selon l'invention, l'état de charge cible 10 de la batterie électrique 1 est déterminé par l'unité de contrôle 2 comme précédemment décrit.

Dans une deuxième étape 200 du procédé selon l'invention, la tension de recharge cible 13 est déterminée par l'unité de contrôle 2 comme précédemment décrit. Comme précédemment décrit, l'étape 200 de détermination de la tension de recharge cible 13 comprend avantageusement une sous-étape 201 de définition de la tension à vide 14 précédemment définie et une sous-étape 202 de définition de la tension additionnelle 15 précédemment décrite, la tension de recharge cible 13 étant définie comme la somme de la tension à vide 14 et de la tension additionnelle 15.

Dans une troisième étape 300 du procédé selon l'invention, la tension de recharge sécurisée 17 est calculée par l'unité de contrôle 2.

Pour ce faire, comme décrit précédemment, la troisième étape 300 du procédé comprend une sous-étape 301 de comparaison de la tension de recharge cible 13 avec une tension seuil minimale 170 et une tension seuil maximale 171 précédemment définies.

Si la tension de recharge cible 13 est comprise entre la tension seuil minimale 170 et la tension seuil maximale 171, ou si la tension de recharge cible 13 est égale à l'une de ces tensions seuil, le procédé selon l'invention prévoit que la tension de recharge sécurisée 17 est égale à la tension de recharge cible 13. Si la tension de recharge cible 13 est strictement inférieure à la tension seuil minimale 170, le procédé selon l'invention prévoit que la tension de recharge sécurisée 17 est égale à la tension seuil minimale 170. Si la tension de recharge cible 13 est strictement supérieure à la tension seuil maximale 171, le procédé selon l'invention prévoit que la tension de recharge sécurisée 17 est égale à la tension seuil maximale 171.

A titre d'exemple non exclusif, pour une batterie électrique rechargeable 1 configurée pour délivrer un courant continu sous une tension de 12 Volt, la tension seuil minimale 170 pourra être de l'ordre de 10 Volt et la tension seuil maximale pourra être de l'ordre de 14 Volt. Ces tensions seuil représentent les limites de fonctionnement de la batterie électrique rechargeable 1, définies afin de garantir une durée de vie optimale et un fonctionnement optimal de cette dernière tout au long de sa durée de vie. Le procédé selon l'invention permet donc de garantir que la tension de recharge sécurisée 17, définie par l'unité de contrôle 2, reste compatible avec les limites de fonctionnement précitées.

Dans une quatrième étape 400 du procédé selon l'invention, la consigne de tension de recharge cible 50 précédemment définie est déterminée au sein de l'unité de contrôle 2 sur la base de l'état de charge cible 10 et de la tension de recharge sécurisée 17, et elle est transmise au producteur électrique 5 précédemment évoqué pour être appliquée aux bornes de la batterie électrique rechargeable 1.

En référence à ce qui précède, la quatrième étape 400 du procédé selon l'invention comprend une sous-étape 401 de calcul de la variation instantanée de tension de recharge 52 précédemment définie, et une sous-étape 402 de comparaison de cette variation instantanée de tension de recharge 52 avec, respectivement, un gradient minimal de tension 520 et un gradient maximal de tension 521 précédemment évoqués.

Si la variation instantanée de tension de recharge 52 est strictement supérieure au gradient maximal de tension 521, le procédé selon l'invention prévoit que la consigne de tension de recharge cible 50 est réduite. Si la variation de tension de recharge 52 est strictement inférieure au gradient minimal de tension 520, le procédé selon l'invention prévoit que la consigne de tension de recharge cible 50 est augmentée. Le procédé selon l'invention prévoit avantageusement la réalisation d'une pluralité de sous-étapes 401 et 402 telles qu'elles viennent d'être décrites, jusqu'à ce que la variation instantanée de tension de recharge 52 soit comprise entre le gradient minimal de tension 520 et le gradient maximal de tension 521, ou égale à l'une de ces deux valeurs. Le procédé selon l'invention propose ainsi une boucle de régulation de la variation instantanée de tension de recharge 52.

Il faut comprendre ici que l'objectif de cette boucle de régulation est que la consigne de tension de recharge cible 50 soit atteinte aux bornes de la batterie électrique 1 sans variation trop brutale de la tension de recharge 51 effectivement mesurée aux bornes de ladite batterie, qui pourrait conduire à un endommagement à la fois de la batterie et de certains composants que celle-ci alimente électriquement.

A titre d'exemple non limitatif, les exigences de fonctionnement d'une batterie électrique rechargeable 1 configurée pour délivrer un courant continu sous une tension de 12 Volt peuvent limiter à +/- 2Volt une variation de tension appliquée pendant un intervalle de temps prédéfini aux bornes de cette batterie afin de préserver à la fois la batterie et les éléments du véhicule qu'elle alimente. La boucle de régulation précitée permet un lissage de la courbe de modification de la tension de recharge 51 effectivement appliquée aux bornes d'une telle batterie pour atteindre la consigne de tension de recharge cible 50.

Complémentairement, la quatrième étape 400 du procédé selon l'invention comporte une sous-étape 403, non représentée sur la Figure 2, de correction de la consigne de tension de recharge cible 50 en fonction de la tension de recharge sécurisée 17 précédemment définie et de la tension de recharge 51 effectivement mesurée aux bornes de la batterie électrique rechargeable 1. Cette sous-étape 403 comporte une opération de calcul, au sein de l'unité de contrôle 2, du facteur de correction 55 précédemment décrit et de l'écart 18, également désigné dans ce qui précède comme variation de tension corrective initiale, entre la tension de recharge sécurisée 17 et la tension de recharge 51 effectivement mesurée aux bornes de la batterie électrique rechargeable 1. La sous-étape 403 comprend avantageusement également une opération de comparaison de la variation de tension corrective initiale 18 avec une valeur seuil minimale et une valeur seuil maximale préalablement définies.

Si la variation de tension corrective initiale 18 est comprise entre la valeur seuil minimale et la valeur seuil maximale précitées, le procédé selon l'invention prévoit que le facteur de correction 55 est égal à la variation de tension corrective initiale 18. Si la variation de tension corrective initiale 18 est strictement inférieure à la valeur seuil minimale précitée, le procédé selon l'invention prévoit que le facteur de correction 55 est égal à cette valeur seuil minimale. Si la variation de tension corrective initiale 18 est strictement supérieure à la valeur seuil maximale précitée, le procédé selon l'invention prévoit que le facteur de correction 55 est égal à cette valeur seuil maximale. Par une succession de sous-étapes 403, le procédé selon l'invention réalise une boucle d'ajustement progressif de la tension de recharge 51 effectivement mesurée aux bornes de la batterie électrique rechargeable 1 au regard de la consigne de tension de recharge cible 50.

En synthèse, l'invention permet de définir, en fonction d'un état de charge cible 10 et d'une tension de recharge cible sécurisée 17, une consigne de tension de recharge cible 50 à appliquer aux bornes d'une batterie électrique rechargeable 1 pour que cette dernière puisse subvenir aux besoins énergétiques 12 du véhicule. Par les boucles de régulation, d'une part, de la tension de recharge 51 effectivement appliquée aux bornes de la batterie électrique rechargeable 1 et, d'autre part, de la variation instantanée de tension de recharge 52 entre la tension de recharge sécurisée 17 et la tension de recharge 51 effectivement mesurée aux bornes de la batterie électrique rechargeable 1, le procédé selon l'invention permet que la consigne de tension de recharge cible 50 précitée soit atteinte dans des conditions optimales de durée de vie et de fonctionnement de la batterie électrique rechargeable 1.

Bien sûr, l'invention n'est pas limitée aux exemples qui viennent d'être décrits et de nombreux aménagements peuvent être apportés à ces exemples sans sortir du cadre de l'invention, qui est défini par les revendications annexées. Notamment, les différentes caractéristiques et variantes de mise en oeuvre de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux. Toutes ces variantes et modes de réalisation font partie de l'invention dans la mesure où elles entrent dans la portée des revendications annexées.

## Revendications

1. Procédé de gestion d'une consigne de tension de recharge cible (50) d'une batterie électrique rechargeable (1) de véhicule automobile, le procédé comportant les étapes suivantes :
- une étape (100) de définition d'un état de charge cible (10) de la batterie électrique rechargeable (1),
- une étape (200) de détermination d'une tension de recharge cible (13) de la batterie électrique rechargeable (1) en fonction de l'état de charge cible (10) de ladite batterie électrique rechargeable (1), la tension de recharge cible (13) étant définie comme la tension à appliquer aux bornes de la batterie électrique rechargeable (1) pour la recharger de manière à atteindre l'état de charge cible (10) précédemment défini,
**caractérisé en ce qu'**il comprend en outre :
- une étape (300) de sécurisation de la tension de recharge cible (13) de la batterie électrique, conduisant à définir une tension de recharge sécurisée (17) de ladite batterie électrique rechargeable (1) en fonction de la tension de recharge cible (13), la tension de recharge sécurisée (17) étant égale à :
- la tension de recharge cible (13) si la tension de recharge cible (13) est comprise entre une tension seuil minimale (170) et une tension seuil maximale (171), ou si la tension de recharge cible (13) est égale à la tension seuil minimale (170) ou à la tension seuil maximale (171),
- la tension seuil minimale (170) si la tension de recharge cible (13) est strictement inférieure à la tension seuil minimale (170),
- la tension seuil maximale (171) si la tension de recharge cible (13) est strictement supérieure à la tension seuil maximale (171),
- une étape (400) de définition d'une consigne de tension de recharge cible (50) de la batterie électrique rechargeable (1), la consigne de tension de recharge cible (50) de la batterie électrique rechargeable (1) étant définie sur la base de la tension de recharge sécurisée (17),
- une étape de correction de la tension de recharge cible (13)appliquée aux bornes de la batterie électrique rechargeable (1) à partir d'une tension de recharge sécurisée (17) et d'une valeur de la tension de recharge (51) mesurée aux bornes de la batterie électrique rechargeable (1).

2. Procédé selon la revendication précédente, dans lequel, dans le cas où une fonctionnalité d'arrêt-démarrage automatique du véhicule automobile est active, alors l'état de charge cible (10) de la batterie électrique rechargeable (1) est déterminé en fonction :
- d'un état de charge cible permettant de réaliser la fonctionnalité d'arrêt-démarrage automatique, et
- d'une estimation d'une consommation électrique du véhicule automobile arrêté pendant une période de référence.

3. Procédé selon l'une quelconque des revendications précédentes, dans lequel l'étape (100) de détermination de l'état de charge cible (10) comporte une étape de détermination d'une marge énergétique de la batterie électrique rechargeable (1) nécessaire à la réalisation de la fonctionnalité d'arrêt-démarrage automatique du véhicule automobile et à la fourniture d'une énergie électrique suffisante à la consommation électrique estimée du véhicule automobile arrêté.

4. Procédé selon l'une quelconque des revendications précédentes, dans lequel l'étape (200) de détermination de la tension de recharge cible (13) comporte une étape de définition d'une tension additionnelle (15) à appliquer aux bornes de la batterie électrique rechargeable (1), la tension additionnelle (15) étant déterminée à partir d'une température (11) de la batterie électrique rechargeable (1) et d'un état de charge de la batterie électrique rechargeable (1), la tension de recharge cible (13) étant déterminée par la somme d'une tension à vide (14) aux bornes de la batterie électrique rechargeable (1) et de la tension additionnelle (15).

5. Procédé selon l'une quelconque des revendications précédentes, dans lequel l'étape de correction de la tension de recharge (51) met en œuvre une régulation de type proportionnel-intégral-dérivé à partir d'un écart de tension entre la tension de recharge sécurisée (17) et la valeur de tension de recharge (51) mesurée aux bornes de la batterie électrique rechargeable (1), dit variation de tension corrective initiale (18), afin de calculer un facteur de correction (55) de ladite tension de recharge (51).

6. Procédé selon la revendication précédente, dans lequel la consigne de tension de recharge cible (50) de la batterie électrique rechargeable est déterminée par la tension de recharge sécurisée (17) à laquelle est appliqué le facteur de correction (55).

7. Unité de contrôle (2) d'une batterie électrique rechargeable (1) de véhicule automobile, l'unité de contrôle (2) étant configurée pour mettre en œuvre le procédé selon l'une quelconque des revendications précédentes

8. Véhicule automobile comportant :
- un réseau de bord alimenté en énergie électrique par un groupe d'alimentation comportant une batterie électrique rechargeable (1),
- un producteur électrique (5) couplé électriquement à la batterie électrique rechargeable (1) et configuré pour pouvoir recharger ladite batterie électrique rechargeable (1),
- une unité de contrôle (2) selon la revendication précédente, connectée à la batterie électrique rechargeable (1) et au producteur électrique (5) de sorte que le producteur électrique (5) pilote une tension de recharge (51) de la batterie électrique rechargeable (1) en fonction d'une consigne de tension de recharge cible (50) déterminée par l'unité de contrôle.

## Patentansprüche

1. Verfahren zum Verwalten eines Ziel-Ladespannungssollwerts (50) einer wiederaufladbaren elektrischen Batterie (1) eines Kraftfahrzeugs, wobei das Verfahren die folgenden Schritte umfasst:
- einen Schritt (100) zum Definieren eines Zielladezustands (10) der wiederaufladbaren elektrischen Batterie (1),
- einen Schritt (200) zum Bestimmen einer Ziel-Ladespannung (13) der wiederaufladbaren elektrischen Batterie (1) als Funktion des Ziel-Ladezustands (10) der wiederaufladbaren elektrischen Batterie (1), wobei die Ziel-Ladespannung (13)
wobei die Spannung als die Spannung definiert ist, die an die Anschlüsse der wiederaufladbaren elektrischen Batterie (1) angelegt werden muss, um diese wieder aufzuladen und den zuvor definierten Zielladezustand (10) zu erreichen, **dadurch gekennzeichnet, dass** es weiterhin umfasst :
- einen Schritt (300) zum Sichern der Ziel-Ladespannung (13) des elektrische Batterie, was zur Definition einer sicheren Ladespannung (17) der wiederaufladbaren elektrischen Batterie (1) als Funktion der Zielladespannung (13) führt, wobei die sichere Ladespannung (17) gleich ist:
- die Ziel-Ladespannung (13), wenn die Ziel-Ladespannung (13) zwischen einer minimalen Schwellenspannung (170) und einer Schwellenspannung liegt Maximum (171) oder wenn die Ziel-Ladespannung (13) gleich der minimalen Schwellenspannung (170) oder der maximalen Schwellenspannung (171) ist,
- die minimale Schwellenspannung (170), wenn die Ziel-Ladespannung (13) strikt niedriger als die minimale Schwellenspannung (170) ist,
- die maximale Schwellenspannung (171), wenn die Ziel-Ladespannung (13) streng größer als die maximale Schwellenspannung (171),
- einen Schritt (400) zum Definieren eines Ziel-Ladespannungssollwerts (50) der wiederaufladbaren elektrischen Batterie (1), wobei der Ziel-Ladespannungssollwert (50) der wiederaufladbaren elektrischen Batterie (1) auf der Grundlage der sicheren Ladespannung (17) definiert wird,
- einen Schritt zum Korrigieren der an die Anschlüsse der wiederaufladbaren elektrischen Batterie (1) angelegten Zielladespannung (13) gegenüber einer sicheren Ladespannung (17) und einem Wert der an den Anschlüssen der wiederaufladbaren elektrischen Batterie (1) gemessenen Ladespannung (51).

2. Verfahren nach dem vorhergehenden Anspruch, bei dem im Falle, dass eine automatische Stopp-Start-Funktionalität des Kraftfahrzeugs aktiv ist, der Ziel-Ladezustand (10) der wiederaufladbaren elektrischen Batterie (1) gemäß folgender Maßgabe bestimmt wird:
- einen Zielladezustand, der das Erreichen der Abschaltfunktionalität ermöglicht- automatischer Start und
- eine Schätzung des Stromverbrauchs des Kraftfahrzeugs im Stand während eines Referenzzeitraums.

3. Ein Verfahren nach einem der Ansprüche vorherige, wobei der Schritt (100) des Bestimmens des Zielladezustands (10) einen Schritt des Bestimmens einer Energiereserve der wiederaufladbaren elektrischen Batterie (1) umfasst, die zum Ausführen der automatischen Stopp-Start-Funktionalität des Kraftfahrzeugs und zum Bereitstellen ausreichender elektrischer Energie für den Stromverbrauch erforderlich ist Schätzwert des angehaltenen Kraftfahrzeuges.

4. Verfahren nach einem der vorhergehenden Ansprüche, bei dem der Schritt (200) des Bestimmens der Ziel-Ladespannung (13) einen Schritt des Definierens einer zusätzlichen Spannung (15) umfasst, die an die Anschlüsse der elektrischen Batterie angelegt werden soll.
wiederaufladbare elektrische Batterie (1), wobei die Zusatzspannung (15) aus einer Temperatur (11) der wiederaufladbaren elektrischen Batterie (1) und einem Ladezustand der wiederaufladbaren elektrischen Batterie (1) bestimmt wird, wobei die Zielladespannung (13) durch die Summe einer Leerlaufspannung (14) an den Anschlüssen der wiederaufladbaren elektrischen Batterie (1) und der Zusatzspannung (15) bestimmt wird.

5. Verfahren nach einem der vorhergehenden Ansprüche, bei dem der Schritt des Korrigierens der Ladespannung (51) eine Regelung vom Typ Proportional-Integral-Differential auf der Grundlage einer Spannungsdifferenz zwischen der sicheren Ladespannung (17) und dem an den Anschlüssen der elektrischen Batterie gemessenen Ladespannungswert (51) durchführt.
wiederaufladbar (1), die anfängliche Korrekturspannungsänderung (18), um einen Korrekturfaktor (55) der genannten Wiederaufladespannung (51) zu berechnen.

6. Verfahren nach dem vorhergehenden Anspruch, bei dem der Soll-Ladespannungssollwert (50) der elektrischen Batterie Die maximale Ladekapazität der wiederaufladbaren Batterien wird durch die sichere Ladespannung (17) bestimmt, auf die der Korrekturfaktor (55) angewendet wird.

7. Steuereinheit (2) einer elektrischen Batterie wiederaufladbare Batterie (1) eines Kraftfahrzeugs, wobei die Steuereinheit (2) konfiguriert, um das Verfahren gemäß einem der vorhergehenden Ansprüche umzusetzen.

8. Kraftfahrzeug, umfassend:
- ein Bordnetz, das von einer Energieversorgungseinheit, die eine wiederaufladbare elektrische Batterie (1) umfasst, mit elektrischer Energie versorgt wird,
- einen elektrischen Generator (5), der elektrisch mit der wiederaufladbaren elektrischen Batterie (1) gekoppelt ist und so konfiguriert ist, dass er die wiederaufladbare elektrische Batterie (1) wieder aufladen kann,
- eine Steuereinheit (2) gemäß dem vorhergehenden Anspruch, die mit der wiederaufladbaren elektrischen Batterie (1) und dem elektrischen Erzeuger (5) verbunden ist, so
dass der elektrische Erzeuger (5) eine Ladespannung (51) der wiederaufladbaren elektrischen Batterie (1) entsprechend einem von der Steuereinheit bestimmten Ziel-Ladespannungssollwert (50) regelt.

## Claims

1. Method for managing a target recharge voltage setpoint (50) of a rechargeable electric battery (1) of a motor vehicle, the method comprising the following steps:
- a step (100) of defining a target state of charge (10) of the rechargeable electric battery (1),
- a step (200) of determining a target recharge voltage (13) of the rechargeable electric battery (1) as a function of the target state of charge (10) of said rechargeable electric battery (1), the target recharge voltage (13) being defined as the voltage to be applied to the terminals of the rechargeable electric battery (1) to recharge it so as to reach the target state of charge (10) previously defined,
**characterized in that** it further comprises:
- a step (300) of securing the target recharge voltage (13) of the electric battery, leading to defining a safe recharge voltage (17) of said rechargeable electric battery (1) as a function of the target recharge voltage (13), the safe recharge voltage (17) being equal to:
- the target recharge voltage (13) if the target recharge voltage (13) is between a minimum threshold voltage (170) and a threshold voltage maximum (171), or if the target recharge voltage (13) is equal to the minimum threshold voltage (170) or the maximum threshold voltage (171),
- the minimum threshold voltage (170) if the target recharge voltage (13) is strictly lower than the minimum threshold voltage (170),
- the maximum threshold voltage (171) if the target recharge voltage (13) is strictly greater than the maximum threshold voltage (171),
- a step (400) of defining a target recharge voltage setpoint (50) of the rechargeable electric battery (1), the target recharge voltage setpoint (50) of the rechargeable electric battery (1) being defined on the basis of the secure recharge voltage (17),
- a step of correcting the target recharge voltage (13) applied to the terminals of the rechargeable electric battery (1) from a secure recharge voltage (17) and a value of the recharge voltage (51) measured at the terminals of the rechargeable electric battery (1).

2. Method according to the preceding claim, in which, in the case where an automatic stop-start functionality of the motor vehicle is active, then the target state of charge (10) of the rechargeable electric battery (1) is determined as a function of:
- a target state of charge allowing the shutdown functionality to be achieved-automatic start, and
- an estimate of the electrical consumption of the motor vehicle stopped during a reference period.

3. A method according to any one of the claims previous, in which the step (100) of determining the target state of charge (10) comprises a step of determining an energy margin of the rechargeable electric battery (1) necessary for achieving the automatic stop-start functionality of the motor vehicle and for providing sufficient electrical energy for the electrical consumption estimated value of the stopped motor vehicle.

4. Method according to any one of the preceding claims,
in which the step (200) of determining the target recharge voltage (13) comprises a step of defining an additional voltage (15) to be applied to the terminals of the electric battery.
rechargeable (1), the additional voltage (15) being determined from a temperature (11) of the rechargeable electric battery (1) and a state of charge of the rechargeable electric battery (1), the target recharge voltage (13) being determined by the sum of an open-circuit voltage (14) at the terminals of the rechargeable electric battery (1) and the additional voltage (15).

5. Method according to any one of the preceding claims, in which the step of correcting the recharge voltage (51) implements a proportional-integral-derivative type regulation from a voltage difference between the secure recharge voltage (17) and the recharge voltage value (51) measured at the terminals of the electric battery.
rechargeable (1), said initial corrective voltage variation (18), in order to calculate a correction factor (55) of said recharge voltage (51).

6. Method according to the preceding claim, in which the target recharge voltage setpoint (50) of the electric battery rechargeable is determined by the safe recharge voltage (17) to which the correction factor (55) is applied.

7. Control unit (2) of an electric battery rechargeable battery (1) of a motor vehicle, the control unit (2) being configured to implement the method according to any one of the preceding claims.

8. Motor vehicle comprising:
- an on-board network supplied with electrical energy by a power supply unit comprising a rechargeable electric battery (1),
- an electrical producer (5) electrically coupled to the rechargeable electric battery (1) and configured to be able to recharge said rechargeable electric battery (1),
- a control unit (2) according to the preceding claim, connected to the rechargeable electric battery (1) and to the electric producer (5) so that the electrical producer (5) controls a recharge voltage (51) of the rechargeable electric battery (1) according to a target recharge voltage setpoint (50) determined by the control unit.
